# EUROPÄISCHE PATENTSCHRIFT

(11) **EP 3 280 629 B1**
(45) Veröffentlichungstag und Bekanntmachung des Hinweises auf die Patenterteilung: **24.02.2021**
(21) Anmeldenummer: 16719022.2
(22) Anmeldetag: 08.04.2016
(51) Int. Cl.: B61G 5/10

(54) **VORRICHTUNG ZUM ÜBERTRAGEN VON DATEN UND/ODER SIGNALEN**
DEVICE FOR TRANSMITTING DATA AND/OR SIGNALS
DISPOSITIF DE TRANSFERT DE DONNÉES ET/OU DE SIGNAUX

(30) Priorität: 10.04.2015 DE 102015105514
(43) Veröffentlichungstag der Anmeldung: 14.02.2018
(73) Patentinhaber: Voith Patent GmbH, 89522 Heidenheim (DE)
(72) Erfinder: NARBERHAUS, Markus, 31139 Hildesheim (DE)
(74) Vertreter: Rupprecht, Kay
(86) Internationale Anmeldenummer: PCT/EP2016/057726
(87) Internationale Veröffentlichungsnummer: WO 2016/162469

(56) Entgegenhaltungen:
- EP-A1- 1 454 808
- WO-A1-2016/016005
- DE-A1-102011 080 097
- DE-A1-102014 110 676
- DE-U1- 29 815 511

## Beschreibung

Die Erfindung betrifft eine Vorrichtung zum Übertragen von Daten und/oder Signalen zwischen einem ersten Wagenkasten und einem mit dem ersten Wagenkasten mechanisch verbundenen zweiten Wagenkasten eines mehrgliedrigen Fahrzeuges, insbesondere spurgeführten Fahrzeuges.

Die Druckschrift DE 10 2014 110 676 A1 betrifft eine Elektrokontaktkupplung für ein spurgeführtes Fahrzeug, wobei die Elektrokontaktkupplung ein Kupplungsgehäuse mit mindestens einer stirnseitigen Gehäuseöffnung aufweist. Um zu erreichen, dass bei der Elektrokontaktkupplung die strom- oder datenführenden Kabel beim Kuppeln der Elektrokontaktkupplung nicht relativ zu der Elektrokontaktkupplung bewegt werden müssen und somit den mechanischen Verschleiß der außenliegenden, beim Kuppeln zur Kupplung relativ bewegenden Kabel/Kabelbäume zu reduzieren, ist ein in dem Kupplungsgehäuse angeordneter erster Kontaktträger mit einer Vielzahl von elektrischen Kontakten sowie ein Kontaktierungsträger mit einer Vielzahl von Kontaktzungen vorgesehen.

Die Druckschrift EP 1 454 808 A1 betrifft eine optische Signalkupplung für zwei miteinander gekuppelte Fahrzeuge und eine Leitungskupplung, die eine derartige Signalkupplung beinhaltet. Die Signalkupplung hat ein erstes und ein zweites Kupplungsteil, die jeweils an einem der Fahrzeuge festgelegt sind und zwischen denen optische Signale übertragen werden.

Die Druckschrift WO 2016/016005 A1 betrifft eine Elektrokontaktkupplung mit Querverbinder für spurgeführte Fahrzeuge, wobei die Elektrokontaktkupplung ein Kupplungsgehäuse, mindestens eine obere Kontaktbank, die innerhalb des Kupplungsgehäuses angeordnet ist und mindestens eine untere Kontaktbank aufweist, die vertikal unterhalb der oberen Kontaktbank und innerhalb des Kupplungsgehäuses angeordnet ist.

Üblicherweise befindet sich die Elektrokontaktkupplung an der Oberseite oder seitlich des Kupplungskopfes einer mechanischen Kupplung und besteht aus einem Gehäuse mit Klappe, einem Kontaktträger mit vorgesetzten Kontakten (Stift-/Buchsenkontakten) zur Übertragung von elektrischen Signalen.

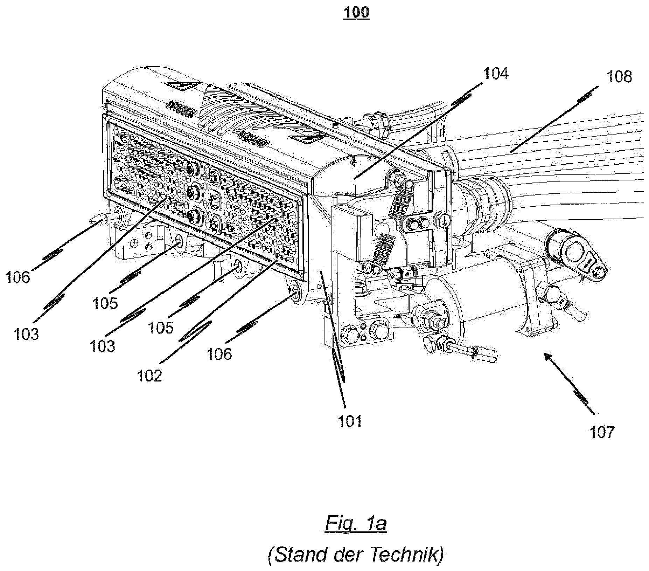

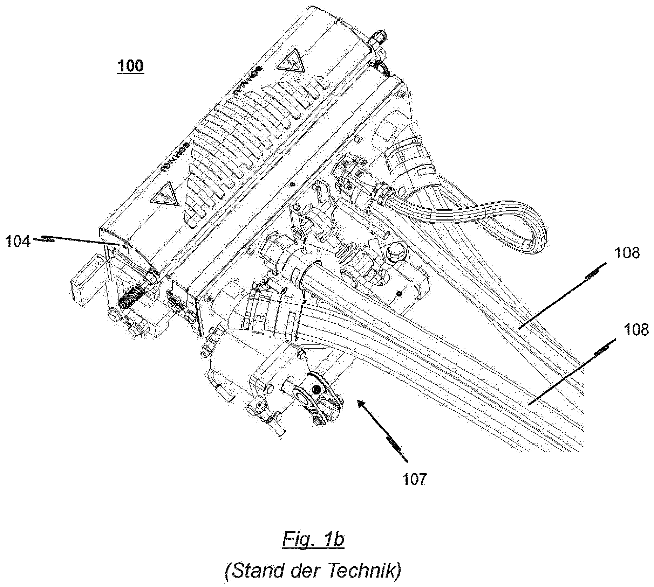

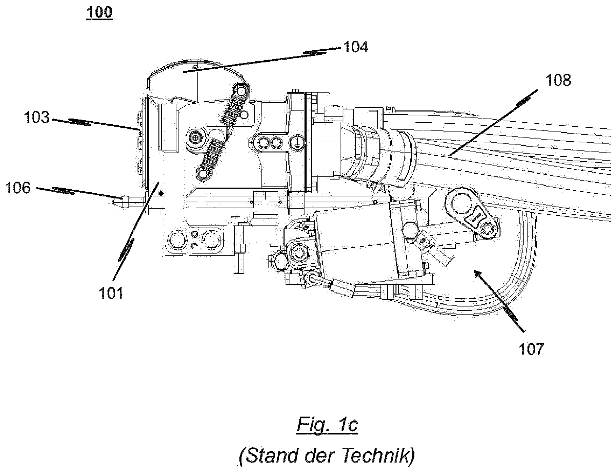

In diesem Zusammenhang wird auf die Darstellung in den Figuren 1a bis 1c verwiesen, wo als Beispiel eine aus dem Stand der Technik bekannte Elektrokontaktkupplung 100 dargestellt ist, und zwar in ihrem geöffneten Zustand, so dass der Kontaktträger 102 mit den Stift-/Buchsenkontakten 103 freiliegt.

Das Gehäuse 101 der Elektrokontaktkupplung 100 hat einen rechteckigen Querschnitt, wobei sich auf der dem Kupplungskopf zugewandten Außenseite Führungen 105 und frontseitige Zentrierelemente 106 befinden. Die Vorderseite des Gehäuses 101 der Elektrokontaktkupplung 100 ist mit dem Kontaktträger 102 dicht verschlossen. Der Kontaktträger 102 ist nach vorn von einer Profildichtung umschlossen. Im Kontaktträger 102 sind Bohrungen angeordnet, in denen Anschlussbolzen sitzen, wobei in die Anschlussbolzen vorderseitig die Stift-/Buchsenkontakte 103 geschraubt sind. Die Rückseite des Gehäuses 101 ist mit einem Deckel dicht verschlossen. Im Deckel befinden sich die Kabelverschraubungen und die Antriebslasche.

Die Klappe 104 der Elektrokontaktkupplung 100, mit welcher bedarfsweise die Stift-/Buchsenkontakte 103 auf dem Kontaktträger 102 geschützt werden können, ist im vorderen Bereich des Gehäuses 101 der Elektrokontaktkupplung 100 schwenkbar gelagert angeordnet. Die Klappe 104 schützt in ungekuppelter Stellung die Kontakte 103 vor Verschmutzung, Wasser und mechanischen Beschädigungen und verhindert ein unbeabsichtigtes Berühren durch Personen.

Um die Elektrokontaktkupplungen 100 zweier benachbart zueinander angeordneter Wagenkästen bzw. Fahrzeuge zu kuppeln, werden die zu kuppelnden Elektrokontaktkupplungen 100 relativ zu der mechanischen Kupplung nach vorne in die gemeinsame Kuppelebene verschoben. Die Zentrierelemente 106 der sich gegenüberliegende Gehäuse 101 der Elektrokontaktkupplungen 100 gleiten ineinander und richten die Gehäuse 101 zueinander aus. Dadurch treffen die entsprechenden Kontakte 103 der Elektrokontaktkupplungen 100 passgenau aufeinander und die Dichtungsrahmen werden gegeneinander gepresst.

Beim Entkuppeln werden die Kontakte 103 der Elektrokontaktkupplungen 100 wieder getrennt, und zwar in dem die Elektrokontaktkupplungen 100 nach hinten aus der Kuppelebene heraus verschoben werden.

Üblicherweise ist jede Elektrokontaktkupplung mit einer entsprechenden Mechanik versehen, damit die Klappe beim Kuppeln und Entkuppeln automatisch geöffnet bzw. geschlossen wird.

Beispielsweise ist aus der Druckschrift EP 0 982 215 B1 eine Elektrokontaktkupplung für automatische Mittelpufferkupplungen bekannt, bei der eine mechanische Mittelpufferkupplung vorgesehen ist, an der die Elektrokontaktkupplung längs verschiebbar gehalten wird. Die aus diesem Stand der Technik bekannte Elektrokontaktkupplung weist zumindest eine über eine Anschlussleitung angeschlossene Steckverbindung auf, welche an der Kupplungstrennstelle eines jeden zu kuppelnden Fahrzeuges angeordnet ist. Um eine redundante, symmetrisch zur senkrechten Mittellängsebene der Kupplungsstange angeordnete Kontaktanordnung zu vermeiden und die Elektrokontaktkupplung insgesamt einfacher und leichter auszubilden, weist die Elektrokontaktkupplung gemäß diesem Stand der Technik ferner einen längs verschiebbaren Adapterkasten auf, der im Kupplungszustand zwischen den jeweiligen Steckverbindungen der gekuppelten Schienenfahrzeuge und im Entkupplungszustand an lediglich einer der jeweiligen Steckverbindungen angeordnet ist. Dieser Adapterkasten enthält die notwendigen elektrischen Verbindungsleitungen zum Verbinden der Anschlussleitungen der zu kuppelnden Fahrzeuge bzw. Wagenkästen.

Des Weiteren ist beispielsweise auf der Druckschrift DE 199 26 085 A1 eine Elektrokontaktkupplung für automatische Mittel- oder Mittelpufferkupplungen bekannt. Diese Elektrokontaktkupplung weist einen am Kupplungskopf der mechanischen Mittel- oder Mittelpufferkupplung befestigten und in Längsrichtung der Mittel- bzw. Mittelpufferkupplung läng verschiebbar geführten Kontaktträger mit Kontakten für elektrische Verbindungen auf. Um zu erreichen, dass die Kontakte für die elektrischen Verbindungen möglichst optimal geschützt sind, ist bei diesem Stand der Technik vorgesehen, dass der Kontaktträger von einer hinteren, ungekuppelten Lage in eine vordere, kuppelbereite Lage verschiebbar ist, wobei der Kontaktträger in der hinteren Lage durch eine Schutzklappe abgedeckt und in der vorderen Lage bei verschwenkter Schutzklappe freigelegt ist.

Ein Grundproblem bei den aus dem Stand der Technik bekannten und vorstehend beschriebenen Elektrokontaktkupplungen ist insbesondere der mechanische Verschleiß der strom- oder datenführenden Kabel, die mit den Elektrokontaktkupplungen zweier benachbarter Wagenkästen durchzukuppeln sind. Dadurch, dass bei den herkömmlichen Lösungen zunächst die Elektrokontaktkupplung relativ zu der mechanischen Kupplung in den kuppelbereiten Zustand verschoben werden muss, sind mechanische Beschädigungen insbesondere durch Verschleiß der außen liegenden, beim Kuppeln relativ zur Kupplung zu bewegenden, strom- bzw. datenführenden Kabel/Kabelbäume unvermeidbar.

Darüber hinaus wird bei den herkömmlichen Lösungen eine relativ aufwendige Mechanik für den elektrischen Kupplungsvorgang benötigt, die üblicherweise außerhalb des Gehäuses der Elektrokontaktkupplung angebracht ist. Dementsprechend entsteht das weitere Problem, dass Witterungseinflüsse, wie Eis und Schnee, zum Ausfall der außenliegenden Komponenten führen können. Insbesondere kann es zum Totalausfall der außenliegenden Mechanik kommen.

Ferner sind bei den herkömmlichen Systemen regelmäßige Wartungen und Überprüfungen der strom- und datenführenden Kabel notwendig, um eine einwandfreie Signal- oder Datenübertragung gewährleisten zu können. Insbesondere ist es erforderlich, die Anschlüsse relativ zu dem mechanischen Kupplungskopf bewegenden Teile der Elektrokontaktkupplung regelmäßig zu kontrollieren und auszutauschen, da diese einem hohen mechanischen Verschleiß unterworfen sind.

Eine weitere Möglichkeit, um höhere Übertragungsraten zu erzielen, könnte im Prinzip darin bestehen, zwischen den Wagenkästen eines mehrgliedrigen Fahrzeuges ein berührungslos arbeitendes Übertragungssystem zur Übertragung von Audiosignalen, Videosignalen, Betriebsdaten, Befehlen und/oder anderen Busdaten vorzusehen. Hierzu wird beispielsweise in der Druckschrift DE 10 2004 037 849 A1 ein Übertragungssystem vorgeschlagen, welches auf einer ersten HF-Komponente, einer zweiten HF-Komponente, einer ersten Sende-/Empfangseinrichtung und einer zweiten Sende-/Empfangseinrichtung besteht. Die HF-Komponenten sind an oder in der Zugkupplung befestigt.

Der Nachteil dieser aus dem Stand der Technik bekannten Lösung ist allerdings insbesondere in der nur geringen Qualität der Datenübertragung zu sehen. Insbesondere eignet sich eine Patch-Antenne, wie sie in der Druckschrift DE 10 2004 37 849 A1 vorgeschlagen wird, nur in eingeschränkter Weise für eine berührungslose Datenübertragung bei einer automatischen Mittelpufferkupplung, da die Gesamtdämpfung des Signalübertragungssystems relativ hoch ist. Dies macht es zwingend erforderlich, dass der Sendepegel der jeweiligen Patch-Antennen entsprechen hoch gewählt werden muss. Auf Grund der ungünstigen Abstrahlcharakteristik der Patch-Antennen führt allerdings ein relativ hoher Sendepegel zu hohen Störemissionen der einzelnen Antennenelemente. Von daher ist mit einem derartigen Signalübertragungssystem im praktischen Gebrauch unter Umständen nur eine unzuverlässige und störungsanfällige Datenübertragung möglich.

Auf Grundlage dieser Problemstellung liegt der vorliegenden Erfindung die Aufgabe zu Grunde, eine Vorrichtung zum Übertragen von Daten und/oder Signalen zwischen einem ersten Wagenkasten und einem mit dem ersten Wagenkasten mechanisch verbundenen zweiten Wagenkasten eines mehrgliedrigen Fahrzeuges anzugeben, bei welcher nicht nur der Wartungsaufwand im Betrieb deutlich reduziert werden kann, sondern gleichzeitig auch eine zuverlässige und insbesondere störungsunempfindliche Signal- oder Datenübertragung bei Übertragungsraten von mindestens 10 Megabit pro Sekunden realisierbar ist.

Eine weitere Aufgabe der Erfindung ist darin zu sehen, eine Elektrokontaktkupplung anzugeben, die insgesamt einfacher und im Vergleich zu den aus dem Stand der Technik bekannten Lösungen leichter ausgebildet ist, wobei die Elektrokontaktkupplung eine zuverlässige und insbesondere störungsunempfindliche Signal- oder Datenübertragung bei Übertragungsraten von mindestens 10 Megabit pro Sekunde realisieren kann.

Im Hinblick auf die Vorrichtung zum Übertragen von Daten und/oder Signalen wird die der vorliegenden Erfindung zu Grunde liegende Aufgabe durch den Gegenstand des unabhängigen Patentanspruchs 1 gelöst, wobei vorteilhafte Weiterbildungen der erfindungsgemäßen Übertragungsvorrichtung in den abhängigen Ansprüchen 2 bis 6 genannt sind.

Im Hinblick auf die Elektrokontaktkupplung wird die der Erfindung zu Grunde liegende Aufgabe durch den Gegenstand des nebengeordneten Patentanspruches 7 gelöst, wobei vorteilhafte Weiterbildungen der Elektrokontaktkupplung in den abhängigen Ansprüchen 8 bis 12 angegeben sind.

Demnach wird insbesondere eine Vorrichtung zum Übertragen von Daten und/oder Signalen zwischen einem ersten Wagenkasten und einem mit dem ersten Wagenkasten mechanisch verbundenen zweiten Wagenkasten eines mehrgliedrigen Fahrzeuges, insbesondere spurgeführten Fahrzeuges angegeben, wobei diese Vorrichtung ein Schnittstellenelement aufweist mit mindestens einer Lichtwellenleiteranordnung. Die Lichtwellenleiteranordnung weist mindestens einen Lichtwellenleiter als Übertragungsmedium für ein leitungsgebundenes Kommunikationssystem des mehrgliedrigen Fahrzeuges auf. Zusätzlich weist die Lichtwellenleiteranordnung ein dem ersten Wagenkasten zugeordnetes erstes Terminal sowie ein dem zweiten Wagenkasten zugeordnetes zweites Terminal auf. Das Schnittstellenelement ist relativ zu einem Kupplungskopf des ersten Wagenkastens in Kupplungslängsrichtung von einer ersten Position, in welcher das Schnittstellenelement mit der mindestens einen Lichtwellenleiteranordnung vollständig in dem Kupplungskopf des ersten Wagenkastens aufgenommen ist, in eine zweite Position und umgekehrt verschiebbar, wobei in der zweiten Position zumindest das zweite Terminal der Lichtwellenleiteranordnung aus dem Kupplungskopf des ersten Wagenkastens heraussteht, so dass eine Datenverbindung zwischen dem mindestens einen Lichtwellenleiter der Lichtwellenleiteranordnung und einem Kontaktterminal eines Kupplungskopfes des zweiten Wagenkastens ausgebildet werden kann. Die mit der erfindungsgemäßen Vorrichtung zum Übertragen von Daten und/oder Signalen erzielbaren Vorteile liegen auf der Hand:
Im Unterschied zu den aus dem Stand der Technik bekannten und eingangs beschriebenen Elektrokontaktkupplungen ist gemäß der vorliegenden Erfindung vorgesehen, dass die jeweiligen Kupplungsgehäuse der entsprechenden Elektrokontaktkupplungen fest (d.h. starr) mit der entsprechenden mechanischen Kupplung, insbesondere Mittel- oder Mittelpufferkupplung, verbunden sein können und insbesondere nicht mehr relativ zu den mechanischen Kupplungen verschiebbar sein müssen. Durch diese Maßnahme kann der Kupplungskopf deutlich kleiner im Vergleich zu den Kupplungsköpfen der aus dem Stand der Technik bekannten Elektrokontaktkupplungen ausgebildet werden, da bei der erfindungsgemäßen Lösung es nicht mehr notwendig ist, dass in dem Kupplungsgehäuse der Elektrokontaktkupplung auch eine zum Verschieben des Kupplungsgehäuses benötigte Mechanik integriert ist.

Dennoch ist bei der erfindungsgemäßen Lösung sichergestellt, dass die Kontakte der Elektrokontaktkupplung erst dann gekuppelt werden, wenn eine starre und weitgehend spielfreie Kupplungsverbindung zwischen den Kupplungsköpfen der mechanischen Kupplungen zweier benachbarten Wagenkästen vorliegt. Im Einzelnen ist bei der erfindungsgemäßen Vorrichtung zum Übertragen von Daten und/oder Signalen hierzu ein Schnittstellenelement vorgesehen, welches relativ zu dem Kupplungskopf des ersten Wagenkastens in Kupplungslängsrichtung verschiebbar ist, und zwar von einer ersten Position, in welcher das Schnittstellen-element vollständig in dem Kupplungskopf des ersten Wagenkastens aufgenommen ist, in eine zweite Position, in welcher das Schnittstellenelement soweit aus dem Kupplungskopf des ersten Wagenkastens herausgefahren ist, dass mit einem benachbarten, zweiten Kupplungskopf einer Elektrokontaktkupplung eine entsprechende Datenverbindung ausgebildet werden kann.

Dieses relativ zu dem Gehäuse der Elektrokontaktkupplung verschiebbar ausgeführtes Schnittstellenelement ermöglicht es ferner, ein leitungsgebundenes Kommunikationssystem, insbesondere Ethernet oder ein anderes lokales Datennetz mit Übertragungsraten von mindestens 10 Megabit pro Sekunde zwischen zwei benachbarten Wagenkästen eines mehrgliedrigen Fahrzeuges durchzukuppeln, da das Schnittstellenelement mindestens eine Lichtwellenleiteranordnung mit mindestens einem Lichtwellenleiter als Übertragungsmedium für das leitungsgebundene Kommunikationssystem des mehrgliedrigen Fahrzeuges aufweist.

Erfindungsgemäß ist hierbei vorgesehen, dass der mindestens eine Lichtwellenleiter der Lichtwellenleiteranordnung einen das erste und zweite Terminal der Lichtwellenleiteranordnung signaltechnisch verbindenden Lichtwellenleiterkern, insbesondere Dünnglaskern, aufweist, wobei selbstverständlich auch andere Ausführungs-formen für den Lichtwellenleiter in Frage kommen. In der zweiten Position des Schnittstellenelements, d.h. in der Position, in welcher das Schnittstellenelement relativ zu dem Kupplungskopf des ersten Wagenkastens (nachfolgend auch als "erster Kupplungskopf" bezeichnet) verschoben ist, ist das dem ersten Wagenkasten zugeordnete erste Terminal der Lichtwellenleiteranordnung vorzugweise derart hinsichtlich eines Kontaktterminals des ersten Kupplungskopfes angeordnet, dass eine Datenverbindung zwischen dem ersten Terminal und dem Kontaktterminal des ersten Kupplungskopfes ausbildbar ist. Vorzugweise ist in der zweiten Position des Schnittstellenelements auch das dem zweiten Wagenkasten zugeordnete zweite Terminal der Lichtwellenleiteranordnung derart hinsichtlich des Kontaktterminals des Kupplungskopfes des zweiten Wagenkastens (nachfolgend auch als "zweiter Kupplungskopf" bezeichnet) angeordnet, dass eine Datenverbindung zwischen dem zweiten Terminal und dem Kontaktterminal des zweiten Kupplungskopfes ausbildbar ist.

Um mit der erfindungsgemäßen Vorrichtung einen möglichst störungsfreien Datenaustausch realisieren zu können, ist in einer bevorzugten Ausführungsform vorgesehen, dass das Kontaktterminal des ersten Kupplungskopfes als ein Sende- und/oder Empfangsterminal und das erste Terminal der Lichtwellenleiteranordnung als ein hierzu entsprechend komplementär ausgeführtes Empfangs- und/oder Sendeterminal ausgebildet sind, so dass eine entsprechende Datenverbindung zwischen dem Kontaktterminal des ersten Wagenkastens und der Lichtwellenleiteranordnung des Schnittstellenelements in der zweiten Position des Schnittstellenelements ausgebildet werden kann. Gleichzeitig hierzu ist es von Vorteil, wenn das Kontaktterminal des zweiten Kupplungskopfes als ein Empfangs- und/oder Sendeterminal und das zweite Terminal der Lichtwellenleiteranordnung als ein hierzu entsprechend komplementär ausgeführtes Sende- und/oder Empfangsterminal ausgebildet ist, um eine entsprechende Datenverbindung zwischen der Lichtwellenleiteranordnung und dem Kontaktterminal des zweiten Kupplungskopfes in der zweiten Position des Schnittstellenelements ausbilden zu können.

Im Hinblick auf das Kontaktterminal des ersten Kupplungskopfes und/oder des zweiten Kupplungskopfes ist es in einer bevorzugten Realisierung der erfindungsgemäßen Lösung vorgesehen, dass dieses Kontaktterminal mit mindestens einem Lichtwellenleiter signaltechnisch verbunden sind, um die über das Schnittstellenelement zu übertragenden Daten und/oder Signale zu dem entsprechenden Kontaktterminal zuzuführen bzw. um die über das Schnittstellenelement übertragenen und von dem entsprechenden Kontaktterminal empfangenen Daten und/oder Signalen entsprechend weiterzuleiten.

Alternativ hierzu ist es allerdings auch denkbar, wenn das Kontaktterminal des ersten und/oder zweiten Kupplungskopfes mit mindestens einer Kupferleitung signaltechnisch verbunden ist, um die über das Schnittstellenelement zu übertragenen Daten und/oder Signale dem entsprechenden Kontaktterminal zuzuführen bzw. um die über das Schnittstellelement übertragenen und von dem entsprechenden Kontaktterminal empfangenen Daten und/oder Signale entsprechend weiterzuleiten. Bei dieser Ausführungsform, bei welcher mindestens eine Kupferleitung zum Einsatz kommt, um die über das Schnittstellenelement übertragenden Daten dem entsprechenden Kontaktterminal zuzuführen bzw. um die von dem Schnittstellenelement übertragenen und von dem entsprechenden Kontaktterminal empfangenen Daten und/oder Signale weiterzuleiten, ist es von Vorteil, wenn das entsprechende Kontaktterminal ausbildet ist, die elektrisch übertragenen Signale in optische Signale und umgekehrt umzuwandeln.

Schließlich ist in einer vorteilhaften Weiterbildung der erfindungsgemäßen Vorrichtung zum Übertragen von Daten und/oder Signalen vorgesehen, dass in der zweiten Position des Schnittstellenelements das Kontaktterminal des ersten Kupplungskopfes und das erste Terminal der Lichtwellenleiteranordnung vertikal übereinander liegen. In vorteilhafterweise gilt auch dies für das Kontaktterminal des zweiten Kupplungskopfes und das zweite Terminal der Lichtwellenleiteranordnung. Hierbei handelt es sich um eine besonders leicht zu realisierende aber dennoch effektive Art und Weise, wie mit dem relativ zu den Kontaktterminals verschiebbaren Schnittstellenelement in der zweiten Position des Schnittstellenelements eine Datenübertragung ermöglicht wird. Selbstverständlich kommen hier aber auch andere Ausführungsformen in Frage.

Gemäß einem weiteren Aspekt betrifft die vorliegende Erfindung eine Elektrokontaktkupplung für ein spurgeführtes Fahrzeug, insbesondere Schienenfahrzeug, wobei die Elektrokontaktkupplung ein Kupplungsgehäuse mit mindestens einer stirnseitigen Gehäuseöffnung sowie einen in dem Kupplungsgehäuse angeordneten ersten Kontaktterminalträger mit mindestens einem Kontaktterminal aufweist. Insbesondere ist bei der erfindungsgemäßen Elektrokontaktkupplung vorgesehen, dass diese mit einer Vorrichtung zur Daten und/oder Signalübertragung der zuvor beschriebenen Art versehen ist.

In einer vorteilhaften Weiterbildung der erfindungsgemäßen Elektrokontaktkupplung ist vorgesehen, dass das Schnittstellenelement als ein vorzugsweise plattenförmiger Kontaktierungsträger mit mindestens einem sich in Längsrichtung des Kontaktierungsträgers erstreckenden Lichtwellenleiter ausgeführt ist.

Der mindestens eine sich in Längsrichtung des Kontaktierungsträgers erstreckende Lichtwellenleiter und/oder das erste bzw. zweite Terminal der Lichtwellenleiteranordnung sind dabei vorzugsweise an einer Unterseite des Kontaktierungsträgers angeordnet, um das Risiko einer Verschmutzung im Betrieb zu verringern. Selbstverständlich ist es aber auch denkbar das erste und zweite Terminal der Lichtwellenleiteranordnung auf einer Oberseite des Kontaktierungsträgers vorzusehen.

Bei der erfindungsgemäßen Elektrokontaktkupplung ist insbesondere vorgesehen, dass der erste Kontaktterminalträger bzw. das erste Kontaktterminal der Elektrokontaktkupplung als aufnehmendes Teil ausgeführt ist, in welchem das Schnittstellenelement zumindest bereichsweise aufgenommen ist. Hierbei ist das Schnittstellenelement relativ zu dem ersten Kontaktterminalträger bzw. relativ zu dem ersten Kontaktterminal von seiner ersten Position in seine zweite Position und umgekehrt verschiebbar.

Um die Bewegung des Schnittstellenelements relativ zu dem Kontaktterminalträger bzw. relativ zu dem ersten Kontaktterminal zu führen, ist vorzugsweise eine entsprechende Führung vorgesehen.

Gemäß einem weiteren Aspekt betrifft die vorliegende Erfindung ferner eine Anordnung bestehend aus einer ersten Elektrokontaktkupplung und einer baugleich hierzu ausgeführten zweiten Elektrokontaktkupplung, welche als Gegenkupplung zu der ersten Elektrokontaktkupplung dient, wobei die erste Elektrokontaktkupplung eine Elektrokontaktkupplung der zuvor beschriebenen Art ist.

Nachfolgend werden exemplarische Ausführungsformen der erfindungsgemäßen Lösung anhand der beiliegenden Zeichnungen näher beschrieben:
Es zeigen:
- FIG. 1a:: eine isometrische Ansicht einer herkömmlichen, aus dem Stand der Technik bekannten Elektrokontaktkupplung mit geöffneter Klappe;
- FIG. 1b:: eine isometrische Ansicht von oben auf die herkömmlich, aus dem Stand der Technik bekannte Elektrokontaktkupplung gemäß FIG. 1a;
- FIG. 1c:: eine Seitenansicht auf die herkömmliche, aus dem Stand der Technik bekannte Elektrokontaktkupplung gemäß FIG. 1a;
- FIG. 2a:: eine Schnittansicht durch eine exemplarische Ausführungsform der erfindungsgemäßen Daten/Signal-Übertragungsvorrichtung, bei welcher das Schnittstellenelement der Daten/Signal-Übertragungsvorrichtung in seiner ersten Position vorliegt;
- FIG. 2b:: eine Schnittansicht durch die exemplarische Ausführungsform gemäß FIG. 2a in einem Zustand, in welchem das Schnittstellenelement in seiner zweiten Position vorliegt;
- FIG. 3:: eine schematische Schnittansicht durch ein erstes Kontaktterminal einer exemplarischen Ausführungsform der erfindungsgemäßen Daten/Signal-Übertragungsvorrichtung;
- FIG. 4a:: eine isometrische Ansicht einer exemplarischen Ausführungsform eines als plattenförmiger Kontaktierungsträger ausgebildeten Schnittstellenelements;
- FIG. 4b:: eine Draufsicht auf das Schnittstellenelement gemäß FIG. 4a;
- FIG. 4c:: eine Schnittansicht entlang der Linie A-A in FIG. 4b;
- FIG. 5a:: schematisch eine Schnittansicht durch eine Anordnung bestehend aus einer ersten Elektrokontaktkupplung und einer baugleich hierzu ausgeführten zweiten Elektrokontaktkupplung, bei welcher das Schnittstellenelement in seiner ersten Position vorliegt;
- FIG. 5b:: die Anordnung gemäß FIG. 5a in einem Zustand, in welchem das Schnittstellenelement in seiner zweiten Position vorliegt; und
- FIG. 6:: eine weitere Ausführungsform der Anordnung gemäß FIG. 5b.

In FIG. 1a ist in einer isometrischen Ansicht eine herkömmliche, aus der Schienenfahrzeugtechnik allgemein bekannte Elektrokontaktkupplung 100 dargestellt. Die Elektrokontaktkupplung 100 ist ausgebildet, um an der Oberseite oder seitlich eines mechanischen Kupplungskopfes einer Mittel- oder Mittelpufferkupplung angeordnet zu werden, und besteht im Wesentlichen aus einem Kupplungsgehäuse 101 mit einer relativ hierzu verschwenkbaren Klappe 104.

Des Weiteren ist ein parallel zur Kuppelebene angeordneter Kontaktträger 102 vorgesehen, der stirnseitig das Kupplungsgehäuse 101 schließt, und in welchem Stift-/Buchsenkontakte 103 eingesetzt sind, über die mit der Elektrokontaktkupplung 100 elektrische Signale oder Energie zu entsprechend komplementär ausgebildeten Kontaktträgern einer in FIG. 1a nicht dargestellten Gegenkupplung übertragbar sind.

Wie in FIG. 1a dargestellt, hat das Kupplungsgehäuse 101 eine im Wesentlichen rechteckigen Querschnitt, wobei auf der im Kupplungsgehäuse 101 zugewandten Außenseite Führungen 105 sowie frontseitige Zentrierelemente 106 vorgesehen sind. Die Führungen 105 dienen dazu, eine Verschiebung des Kupplungsgehäuses 101 relativ zu dem Kupplungsgehäuse einer mechanischen Kupplung, insbesondere Mittel- oder Mittelpufferkupplung (nicht dargestellt), zu führen. Dies ist insofern bei der herkömmlichen aus dem Stand der Technik bekannten Elektrokontaktkupplung 100 notwendig, inwiefern diese erst dann mit einer entsprechenden Gegenkupplung gekuppelt werden kann, wenn die Elektronkontaktkupplung 100 zuvor in die gemeinsame (vertikale) Kuppelebene verschoben wurde. Insbesondere muss hierzu die herkömmliche Elektrokontaktkupplung 100 mit einem entsprechenden Verschiebemechanismus 107 versehen sein, was den Aufbau der Elektrokontaktkupplung 100 insgesamt verkompliziert und insbesondere zu einer relativ großen Abmessung der Elektrokontaktkupplung 100 führt. Ein beispielhafter Verschiebemechanismus 107, welcher sich insbesondere an der Außenseite des bekannten Kupplungsgehäuses 101 befindet, ist in den Figuren 1a bis 1c dargestellt.

Darüber hinaus ist ein Nachteil der herkömmlichen und exemplarisch in FIG. 1a bis FIG. 1c dargestellten Elektrokontaktkupplung 100 darin zu sehen, dass aufgrund der beim Kupplungsvorgang zwingend erforderlichen Relativbewegung des Kupplungsgehäuses 101 relativ zu der mechanischen Kupplung grundsätzlich eine Belastung der mit der Elektrokontaktkupplung 100 verbundenen Signal- bzw. Datenleitungen 108 verbunden ist, was zwangsläufig zu einem mechanischen Verschleiß dieser Signal bzw. Datenleitungen 108 führt.

Ferner ist als Nachteil zu nennen, dass die herkömmliche und exemplarisch in FIG. 1a dargestellte Elektrokontaktkupplung 100 nicht ausgelegt ist, Signale und/oder Daten mit Übertragungsraten größer 1 Gbit/s zu übertragen.

Wie es nachfolgend anhand der exemplarischen Ausführungsformen der erfindungsgemäßen Lösung näher beschrieben wird, treten diese Nachteile bei der erfindungsgemäßen Lösung nicht mehr auf.

Im Einzelnen zeichnet sich die erfindungsgemäße Elektrokontaktkupplung insbesondere dadurch aus, das eine spezielle Daten/Signal-Übertragungsvorrichtung zum Einsatz kommt, mit welcher es nicht mehr notwendig ist, dass die Elektrokontaktkupplung oder zumindest das Kupplungsgehäuse der Elektrokontaktkupplung eine Relativbewegung zu einer mit der Elektrokontaktkupplung verbundenen mechanischen Kupplung ausführen muss, wenn die Elektrokontaktkupplung in ihrem kuppelbereiten Zustand zu überführen ist. Vielmehr ist gemäß der Erfindung vorgesehen, dass das Kupplungsgehäuse der Elektrokontaktkupplung starr mit der entsprechenden mechanischen Kupplung verbunden bzw. verbindbar ist, wobei sich nur ein Schnittstellenelement bei welchem es sich vorzugsweise um einen plattenförmigen Kontaktierungsträger handelt, relativ zu der mechanischen Kupplung und dem Kupplungsgehäuse der Elektrokontaktkupplung bewegen kann, und von einem ungekuppelten Zustand (erste Position) in einen gekuppelten bzw. kuppelbereiten Zustand (zweite Position) überzugehen. In dem ungekuppelten befindet sich das Schnittstellenelement in seiner ersten Position, in welcher das Schnittstellenelement vollständig in dem Kupplungsgehäuse der Elektrokontaktkupplung aufgenommen ist. In dem gekuppelten bzw. kuppelbereiten Zustand befindet sich das Schnittstellenelement in einer zweiten Position, in welcher zumindest ein stirnseitiger Endbereich des Schnittstellenelements aus dem Kupplungsgehäuse der Elektrokontaktkupplung hervorsteht und sich somit anbietet, eine signaltechnische Verbindung mit einer entsprechenden Gegenkupplung auszubilden.

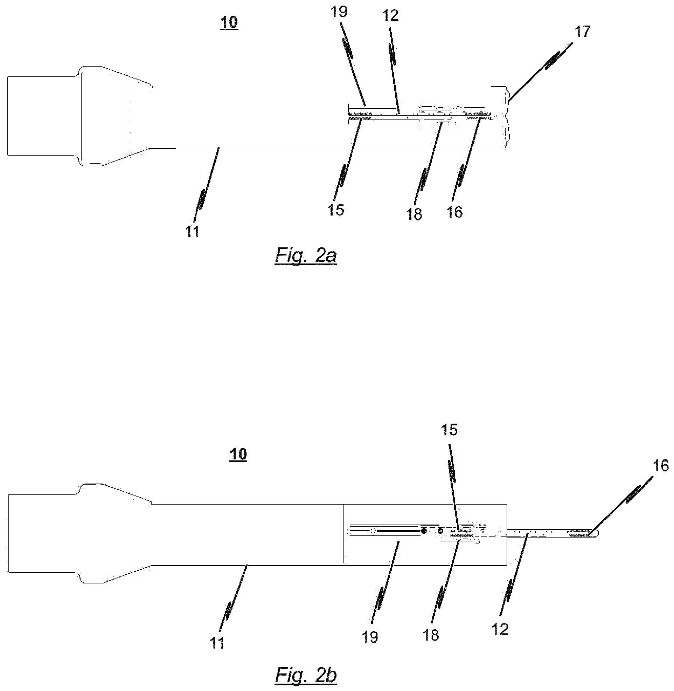

In FIG. 2a ist schematisch eine exemplarische Ausführungsform der erfindungsgemäßen Elektrokontaktkupplung 10 in einer teilgeschnitten Ansicht gezeigt, wobei in dieser Elektrokontaktkupplung die erfindungsgemäße Daten/ Signalübertragungsvorrichtung integriert ist. Im Einzelnen ist in FIG. 2a die Elektrokontaktkupplung 10 in einem Zustand gezeigt, in welchem das Schnittstellenelement 12 der Daten/Signalübertragungsvorrichtung in seinem ersten Zustand vorliegt, also innerhalb des Kupplungsgehäuses 11 der Elektrokontaktkupplung 10 vollständig aufgenommen ist.

In FIG. 2b ist die Elektrokontaktkupplung 10 gemäß FIG. 2a in ihrem kuppelbereiten Zustand gezeigt, das heißt in einem Zustand, in welchem das Schnittstellenelement 12 relativ zu dem Kupplungsgehäuse 11 der Elektrokontaktkupplung 10 in Richtung Kupplungsebene verschoben vorliegt derart, dass zumindest ein stirnseitiger Endbereich des Schnittstellenelements 12 aus dem Kupplungsgehäuse 11 hervorragt.

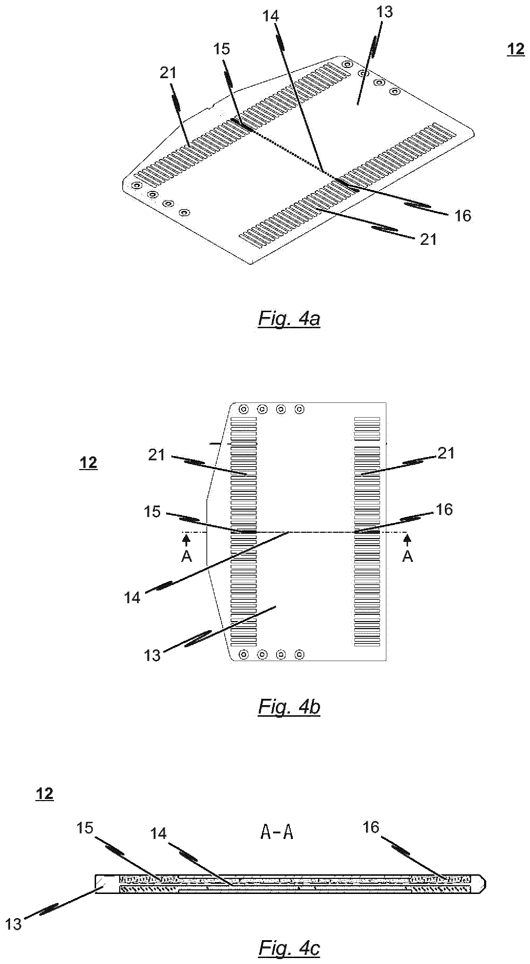

Wie es insbesondere auch den Darstellungen in den Figuren 4a bis 4c entnommen werden kann, ist gemäß bevorzugten Ausführungsformen der erfindungsgemäßen Lösung das Schnittstellenelement 12 als plattenförmiger Kontaktierungsträger ausgebildet, welcher ein Trägersubstrat 13 aufweist, in welchem mindestens ein sich in Längsrichtung des Schnittstellenelements 12 erstreckender Lichtwellenleiter 14 integriert ist.

Bei dem mindestens einen in dem Trägersubstrat 13 des Schnittstellenelements 12 integrierten Lichtwellenleiter 14 handelt es sich vorzugsweise um einen Lichtwellenleiterkern, insbesondere Dünnglaskern. Dieser Lichtleiterkern verbindet ein erstes Terminal 15 des Schnittstellenelements 12 mit einem zweiten Terminal 16 des Schnittstellenelements 12. Das erste Terminal 15 des Schnittstellenelements 12 ist der Elektrokontaktkupplung 10 zugeordnet, während das zweite Terminal 16 des Schnittstellenelements 12 einer mit der Elektrokontaktkupplung 10 zu kuppelnden Gegenkupplung (in FIG. 2a, b nicht dargestellt) zugeordnet ist.

In der in FIG. 2a gezeigten ersten Position des Schnittstellenelements 12 ist das Schnittstellenelement 12 derart in das Kupplungsgehäuse 11 der Elektrokontaktkupplung 10 zurückgezogen, dass auch das zweite Terminal 16 des Schnittstellenelements 12 nicht aus der mit Hilfe einer Dichtungsanordnung 17 abgedichteten Stirnseite des Kupplungsgehäuses 11 herausragt.

In der zweiten Position des Schnittstellenelements 12 hingegen ist das Schnittstellenelement 12 relativ zu dem Kupplungsgehäuse 11 der Elektrokontaktkupplung 10 Richtung Kupplungsebene soweit verschoben, dass das zweite Terminal 16 des Schnittstellenelements 12 aus der Stirnseite des Kupplungsgehäuses 11 herausragt, sodass eine Daten/Signalverbindung mit einer in FIG. 2b nicht gezeigten Gegenkupplung realisierbar ist.

Gleichzeitig steht in der zweiten Position des Schnittstellenelements 12 das der Elektrokontaktkupplung 10 zugeordnete erste Terminal 15 des Schnittstellenelements 12 Signal- bzw. Datentechnisch mit einem Kontaktterminal 18 der Elektrokontaktkupplung 10 derart in Kontakt, dass Signale und/oder Daten von dem Kontaktterminal 18 über das erste Terminal 15 dem Lichtwellenleiter 14 zugeführt werden können.

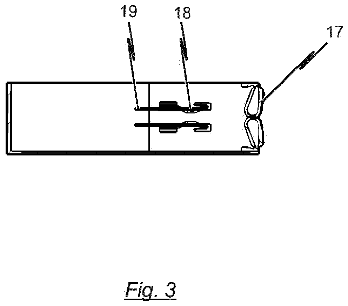

Eine exemplarische Ausführungsform eines Kontaktterminals 18 der Elektronkontaktkupplung 10 ist in einer Schnittansicht in FIG. 3 dargestellt.

Demnach ist das Kontaktterminal 18 der Elektrokontaktkupplung 10 vorzugsweise als ein aufnehmendes Element ausgeführt, in welchem das Schnittstellenelement 12 (in FIG. 3 nicht dargestellt) zumindest bereichsweise aufgenommen ist.

Wie es den Darstellungen in den Figuren 2a und 2b entnommen werden kann, ist dabei das Schnittstellenelement 12 relativ zu dem Kontaktterminal 18 von seiner ersten Position (vgl. FIG. 2a) in seine zweite Position (vgl. FIG. 2b) und umgekehrt verschiebbar.

Hierzu weist das Kontaktterminal 18 vorzugsweise eine entsprechende Führung 19 auf, um eine Führung der Bewegung des Schnittstellenelements 12 relativ zu dem Kontaktterminal 18 zu gewährleisten.

Das Kontaktterminal 18 der Elektrokontaktkupplung 10 ist vorzugsweise als Sendeterminal ausgebildet, wobei das erste Terminal 15 des Schnittstellenelements 12 als ein hierzu entsprechend komplementär ausgeführtes Empfangsterminal ausgebildet ist. Auf diese Weise kann in der zweiten Position des Schnittstellenelements 12 eine entsprechende Datenverbindung ausgebildet werden.

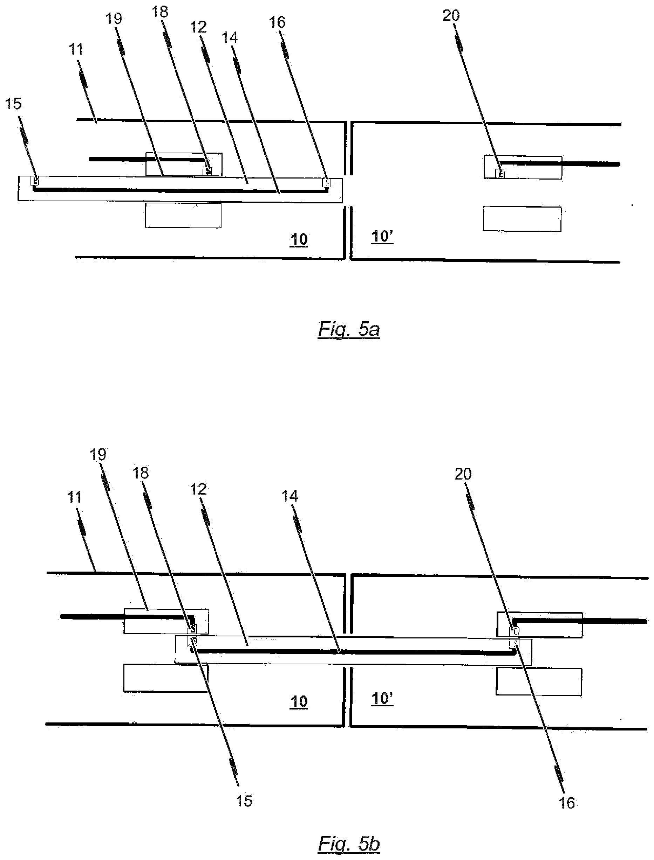

In gleicher Weise ist das zweite Terminal 16 des Schnittstellenelements 12 als Sendeterminal ausgebildet, während das Kontaktterminal 20 einer entsprechenden Gegenkupplung 10' (vgl. FIG. 5a, b) als Empfangsterminal ausgeführt ist. Auf diese Weise kann eine Daten und/oder Signalübertragung von dem ersten Kontaktterminal 18 über das Schnittstellenelement 12 auf das zweite Kontaktterminal 20 der Gegenkupplung 10' realisiert werden.

Selbstverständlich ist es in diesem Zusammenhang auch denkbar, dass Kontaktterminal 18 der Elektrokontaktkupplung 10 als Empfangsterminal und das erste Terminal 15 des Schnittstellenelements 12 als ein hierzu entsprechend komplementär ausgeführtes Sendeterminal auszubilden, wenn eine Daten/ Signalübertragung von der Gegenkupplung 10' zu der Elektrokontaktkupplung 10 erwünscht ist. Dann ist das Kontaktterminal 20 der Gegenkupplung 10' entsprechend als Sendeterminal und das zweite Terminal 16 des Schnittstellenelements 12 als Empfangsterminal auszuführen.

Obwohl in den Zeichnungen nicht explizit dargestellt, ist das Kontaktterminal 18 der Elektrokontaktkupplung 10 vorzugsweise zumindest mit einem Lichtwellenleiter signaltechnisch verbunden, um entsprechende Daten und/oder Signale, welche über das Schnittstellenelement 12 zu übertragen sind, dem Kontaktterminal 18 zuzuführen.

Alternativ hierzu ist es aber auch denkbar, über mindestens eine Kupferleitung dem Kontaktterminal 18 die über das Schnittstellenelement 12 zu übertragenden Daten und/oder Signale zuzuführen. Das gleiche gilt entsprechend auch für das Kontaktterminal 20 der Gegenkupplung 10'.

Insbesondere ist es in diesem Zusammenhang denkbar, dass der Elektrokontaktkupplung 10 bzw. Gegenkupplung 10' ein entsprechender Medienkonverter zugeordnet ist, welchem die über das Schnittstellenelement 12 zu übertragenden Daten und/oder Signale über eine Kupferleitung zugeführt werden, wobei dieser Medienkonverter ausgebildet ist, die zugeführten Daten und/oder Signale in optische Signale umzuwandeln, so dass diese dann über einen Lichtwellenleiter dem Kontaktterminal 18 zugeführt werden können, von dem die Signale dann in den Lichtwellenleiter 14 des Schnittstellenelements 12 eingespeist werden.

Nachfolgend wird im Einzelnen die in den Figuren 5a und 5b gezeigte exemplarische Ausführungsform näher beschrieben.

Im Einzelnen ist in FIG. 5a eine erste Elektrokontaktkupplung 10 und eine entsprechende Gegenkupplung 10' schematisch dargestellt, und zwar in einem Zustand in welchem die Elektrokontaktkupplung 10 (noch) nicht in ihrem kuppelbereiten bzw. gekuppelten Zustand vorliegt.

Wie schematisch in FIG. 5a angedeutet, ist in diesem ersten Zustand das Schnittstellenelement 12 noch vollständig in dem Kupplungsgehäuse 11 der Elektrokontaktkupplung zurückgezogen und somit dort aufgenommen. Zum Ausbilden einer signal/datentechnischen Verbindung zwischen der Elektrokontaktkupplung 10 und der Gegenkupplung 10' ist das Schnittstellenelement 12 relativ zu dem Kupplungsgehäuse 11 der Elektrokontaktkupplung 10 in Richtung der Gegenkupplung 10' zu verschieben, wie es in FIG. 5b angedeutet ist.

Im Einzelnen sind in FIG. 5b die Terminals (erste Terminal 15, zweites Terminal 16) des Schnittstellenelements 12 derart an der Oberseite des Schnittstellenelements 12 angeordnet, dass in dem gekuppelten Zustand gemäß FIG. 5b das als Empfangsterminal ausgeführte erste Terminal 15 und das als Sendeterminal ausgeführte zweite Terminal 16 des Schnittstellenelements 11 vertikal unterhalb der als Sende- bzw. Empfangsterminal ausgebildeten Kontaktterminal 18, 20 der Elektrokontaktkupplungen 10, 10'.

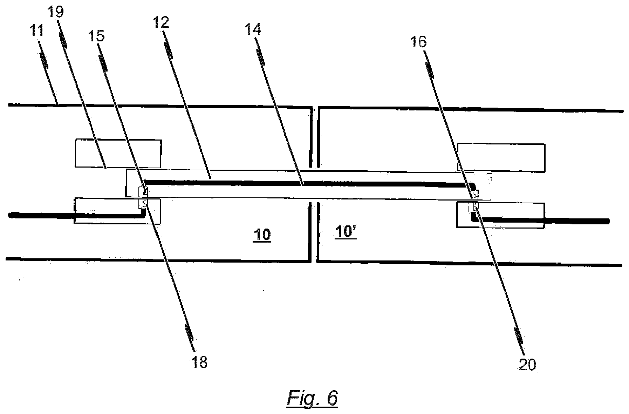

Besonders bevorzugt sind jedoch die ersten und zweiten Terminals 15, 16 des Schnittstellenelements 12 an einer Unterseite des Schnittstellenelements 12 angeordnet, wie es in FIG. 6 schematisch dargestellt ist.

Bei dieser Ausführungsform ist das Risiko einer Verschmutzung der Terminals 15, 16 des Schnittstellenelements 12 im Betrieb noch weiter reduziert.

Die erfindungsgemäße Signal/Datenübertragungsvorrichtung eignet sich insbesondere für Datenübertragungsraten von mindesten 10 Megabit pro Sekunde, wie es insbesondere für Multimediaverbindungen erwünscht ist.

Wie es den Darstellungen in den Figuren 4a und 4b entnommen werden kann, ist es selbstverständlich denkbar, dass das Schnittstellenelement 12 zusätzlich zu dem mindestens einen Lichtwellenleiter 14 weitere Kontaktzungen 21, insbesondere auch solche, die zur (klassischen) Übertragung von elektrischen Signalen dienen, vorgesehen sind.

Die Erfindung ist nicht auf die in den Zeichnungen dargestellten Ausführungsformen beschränkt, sondern ergibt sich aus einer Zusammenschau sämtlicher hierin offenbarter Merkmale.

### Bezugszeichenliste

- 10: Elektrokontaktkupplung
- 10': Gegenkupplung
- 11: Kupplungsgehäuse der Elektrokontaktkupplung
- 12: Schnittstellenelement
- 13: Trägersubstrat
- 14: Lichtwellenleiter
- 15: erstes Terminal des Schnittstellenelements
- 16: zweites Terminal des Schnittstellenelements
- 17: Dichtungsanordnung der Elektrokontaktkupplung
- 18: Kontaktterminal der Elektrokontaktkupplung
- 19: Führung
- 20: Kontaktterminal der Gegenkupplung
- 21: Kontaktzungen

- 100: Elektrokontaktkupplung (Stand der Technik)
- 101: Kupplungsgehäuse (Stand der Technik)
- 102: Kontaktträger (Stand der Technik)
- 103: Stift-/Buchsenkontakte (Stand der Technik)
- 104: Klappe (Stand der Technik)
- 105: Führung (Stand der Technik)
- 106: Zentrierelement (Stand der Technik)

## Patentansprüche

1. Vorrichtung zum Übertragen von Daten und/oder Signalen zwischen einem ersten Wagenkasten und einem mit dem ersten Wagenkasten mechanisch verbundenen zweiten Wagenkasten eines mehrgliedrigen Fahrzeuges, insbesondere spurgeführten Fahrzeuges, wobei die Vorrichtung ein Schnittstellenelement (12) aufweist mit mindestens einer Lichtwellenleiteranordnung, wobei die Lichtwellenleiteranordnung mindestens einen Lichtwellenleiter (14) als Übertragungsmedium für ein leitungsgebundenes Kommunikationssystem des mehrgliedrigen Fahrzeuges und ein dem ersten Wagenkasten zugeordnetes erstes Terminal (15) sowie ein dem zweiten Wagenkasten zugeordnetes zweites Terminal (16) aufweist, wobei das Schnittstellenelement (12) relativ zu einem Kupplungskopf des ersten Wagenkastens in Kupplungslängsrichtung von einer ersten Position, in welcher das Schnittstellenelement (12) mit der mindestens einen Lichtwellenleiter-anordnung vollständig in dem Kupplungskopf des ersten Wagenkastens aufgenommen ist, in eine zweite Position und umgekehrt verschiebbar ist, wobei in der zweiten Position zumindest das zweite Terminal (16) der Lichtwellenleiteranordnung aus dem Kupplungskopf des ersten Wagenkastens heraussteht zum Ausbilden einer Datenverbindung zwischen dem mindestens einen Lichtwellenleiter (14) der Lichtwellenleiteranordnung und einem Kontaktterminal (20) eines Kupplungskopfes des zweiten Wagenkastens, wobei der mindestens eine Lichtwellenleiter (14) der Lichtwellenleiteranordnung einen das erste und zweite Terminal (15, 16) signaltechnisch verbindenden Lichtleiterkern, insbesondere Dünnglaskern, aufweist.

2. Vorrichtung nach Anspruch 1,
wobei in der zweiten Position des Schnittstellenelements (12) das den ersten Wagenkasten zugeordnete erste Terminal (15) der Lichtwellenleiteranordnung derart hinsichtlich eines Kontaktterminals (18) des Kupplungskopfes des ersten Wagenkastens angeordnet ist, das eine Datenverbindung zwischen dem ersten Terminal (15) und dem Kontaktterminal (18) des Kupplungskopfes des ersten Wagenkastens ausbildbar ist; und/oder wobei in der zweiten Position des Schnittstellenelements (12) das dem zweiten Wagenkasten zugeordnete zweite Terminal (16) der Lichtwellenleiteranordnung derart hinsichtlich des Kontaktterminals (20) des Kupplungs-kopfes des zweiten Wagenkastens angeordnet ist, dass eine Datenverbindung zwischen dem zweiten Terminal (16) und dem Kontaktterminal (20) des Kupplungskopfes des zweiten Wagenkastens ausbildbar ist.

3. Vorrichtung nach Anspruch 1 oder 2,
wobei das Kontaktterminal (18) des Kupplungskopfes des ersten Wagenkastens als eine Sende- und/oder Empfangsterminal und das erste Terminal (15) der Lichtwellenleiteranordnung als ein hierzu entsprechend komplementär ausgeführtes Empfangs- und/oder Sendeterminal ausgebildet sind zum Ausbilden einer Datenverbindung in der zweiten Position des Schnittstellenelements (12); und/oder
wobei das Kontaktterminal (20) des Kupplungskopfes des zweiten Wagenkastens als ein Empfangs- und/oder Sendeterminal und das zweite Terminal (16) der Lichtwellenleiteranordnung als ein hierzu entsprechend komplementär ausgeführtes Sende- und/oder Empfangsterminal ausgebildet sind zum Ausbilden einer Datenverbindung in der zweiten Position des Schnittstellenelements (12).

4. Vorrichtung nach Anspruch 2 oder 3,
wobei das Kontaktterminal (18) des Kupplungskopfes des ersten Wagenkastens mit mindestens einem Lichtwellenleiter signaltechnisch verbunden ist zum Zuführen der über das Schnittstellenelement (12) zu übertragenden Daten und/oder Signale zu dem Kontaktterminal (18); und/oder wobei das Kontaktterminal (20) des Kupplungskopfes des zweiten Wagen-kastens mit mindestens einem Lichtwellenleiter signaltechnisch verbunden ist zum Weiterleiten der über das Schnittstellenelement (12) übertragen und von dem Kontaktterminal (20) empfangenen Daten und/oder Signalen.

5. Vorrichtung nach Anspruch 2 oder 3,
wobei das Kontaktterminal (18) des Kupplungskopfes des ersten Wagenkastens mit mindestens einer Kupferleitung signaltechnisch verbunden ist zum Zuführen der über das Schnittstellenelement (12) zu übertragenden Daten und/oder Signale zu dem Kontaktterminal (18); und/oder wobei das Kontaktterminal (20) des Kupplungskopfes des zweiten Wagenkastens mit mindestens einer Kupferleitung signaltechnisch verbunden ist zum Weiterleiten der über das Schnittstellenelement (12) übertragenen und von dem Kontaktterminal (20) empfangenen Daten und/oder Signale.

6. Vorrichtung nach einem der Ansprüche 2 bis 5,
wobei in der zweiten Position des Schnittstellenelements (12) das Kontaktterminal (18) des Kupplungskopfes des ersten Wagenkastens und das erste Terminal (15) der Lichtwellenleiteranordnung vertikal übereinanderliegen; und/oder
wobei in der zweiten Position des Schnittstellenelements (12) das Kontaktterminal (20) des Kupplungskopfes des zweiten Wagenkastens und das zweite Terminal (16) der Lichtwellenleiteranordnung vertikal übereinanderliegen.

7. Elektrokontaktkupplung (10) für ein spurgeführtes Fahrzeug, insbesondere Schienenfahrzeug, wobei die Elektrokontaktkupplung (10) folgendes aufweist:
- ein Kupplungsgehäuse (11) mit mindestens einer stirnseitigen Gehäuseöffnung;
- eine in dem Kupplungsgehäuse (11) angeordneten ersten Kontakt-terminalträger mit mindestens einem Kontaktterminal (18); und
- eine Vorrichtung nach einem der Ansprüche 1 bis 6.

8. Elektrokontaktkupplung nach Anspruch 7,
wobei das Schnittstellenelement (12) als ein vorzugsweise plattenförmiger Kontaktierungsträger mit mindestens einem sich in Längsrichtung des Kontaktierungsträgers erstreckenden Lichtwellenleiter (14) ausgeführt ist.

9. Elektrokontaktkupplung nach Anspruch 8,
wobei das erste und/oder zweite Terminal (15, 16) an einer Unterseite des Kontaktierungsträgers angeordnet sind/ist.

10. Elektrokontaktkupplung nach einem der Ansprüche 7 bis 9,
wobei der erste Kontaktterminalträger bzw. das erste Kontaktterminal (18) als aufnehmendes Teil ausgeführt ist, in welchem das Schnittstellenelement (12) zumindest bereichsweise aufgenommen ist.

11. Elektrokontaktkupplung nach einem der Ansprüche 7 bis 10,
wobei das Schnittstellenelement (12) relativ zu dem ersten Kontaktterminalträger bzw. relativ zu dem ersten Kontaktterminal (18) von seiner ersten in seine zweite Position und umgekehrt verschiebbar ist.

12. Elektrokontaktkupplung nach Anspruch 11,
wobei ferner eine Führung (19) vorgesehen ist zum Führen der Bewegung des Schnittstellenelements (12) relativ zu dem Kontaktterminalträger bzw. relativ zu dem Kontaktterminal (18).

13. Anordnung bestehend aus einer ersten Elektrokontaktkupplung (10) und einer vorzugsweise baugleich hierzu ausgeführten zweiten Elektrokontaktkupplung (10'), welche als Gegenkupplung zu der ersten Elektrokontaktkupplung (10) dient, wobei die erste Elektrokontaktkupplung (10) eine Elektrokontaktkupplung nach einem der Ansprüche 7 bis 12 ist.

## Claims

1. A device for transmitting data and/or signals between a first car body of a multi-member vehicle, a track-guided vehicle in particular, and a second car body mechanically connected to the first car body, wherein the device comprises an interface element (12) having at least one optical waveguide arrangement, wherein the optical waveguide arrangement comprises at least one optical fiber (14) as a transmission medium for a line-connected communication system of the multi-member vehicle and a first terminal (15) assigned to the first car body as well as a second terminal (16) assigned to the second car body, wherein the interface element (12) is displaceable in the longitudinal coupling direction relative to a coupling head of the first car body from a first position, in which the interface element (12) with the at least one optical waveguide arrangement is fully accommodated in the coupling head of the first car body, into a second position and vice versa, wherein in the second position, at least the second terminal (16) of the optical waveguide arrangement projects from the coupling head of the first car body so as to establish a data connection between the at least one optical fiber (14) of the optical waveguide arrangement and a contact terminal (20) of a coupling head of the second car body, wherein the at least one optical fiber (14) of the optical waveguide arrangement has an optical fiber core, particularly a thin glass core, signal-connecting the first and second terminal (15, 16).

2. The device according to claim 1,
wherein in the second position of the interface element (12), the first terminal (15) of the optical waveguide arrangement assigned to the first car body is arranged with respect to a contact terminal (18) of the coupling head of the first car body such that a data connection can be established between the first terminal (15) and the contact terminal (18) of the coupling head of the first car body; and/or wherein in the second position of the interface element (12), the second terminal (16) of the optical waveguide arrangement assigned to the second car body is arranged with respect to the contact terminal (20) of the coupling head of the second car body such that a data connection can be established between the second terminal (16) and the contact terminal (20) of the coupling head of the second car body.

3. The device according to claim 1 or 2,
wherein the contact terminal (18) of the coupling head of the first car body is designed as a transmitting and/or receiving terminal and the first terminal (15) of the optical waveguide arrangement is designed as a receiving and/or transmitting terminal formed correspondingly complementary thereto for establishing a data connection in the second position of the interface element (12); and/or
wherein the contact terminal (20) of the coupling head of the second car body is designed as a receiving and/or transmitting terminal and the second terminal (16) of the optical waveguide arrangement is designed as a transmitting and/or receiving terminal formed correspondingly complementary thereto for establishing a data connection in the second position of the interface element (12).

4. The device according to claim 2 or 3,
wherein the contact terminal (18) of the coupling head of the first car body is signal-connected to at least one optical fiber in order to conduct the data and/or signals to be transmitted via the interface element (12) to the contact terminal (18); and/or wherein the contact terminal (20) of the coupling head of the second car body is signal-connected to at least one optical fiber in order to relay the data and/or signals transmitted via the interface element (12) and received by the contact terminal (20).

5. The device according to claim 2 or 3,
wherein the contact terminal (18) of the coupling head of the first car body is signal-connected to at least one copper line in order to conduct the data and/or signals to be transmitted via the interface element (12) to the contact terminal (18); and/or
wherein the contact terminal (20) of the coupling head of the second car body is signal-connected to at least one copper line in order to relay the data and/or signals transmitted via the interface element (12) and received by the contact terminal (20).

6. The device according to one of claims 2 to 5,
wherein in the second position of the interface element (12), the contact terminal (18) of the coupling head of the first car body and the first terminal (15) of the optical waveguide arrangement lie one above the other vertically; and/or
wherein in the second position of the interface element (12), the contact terminal (20) of the coupling head of the second car body and the second terminal (16) of the optical waveguide arrangement lie one above the other vertically.

7. An electrical contact coupling (10) for a track-guided vehicle, a railway vehicle in particular, wherein the electrical contact coupling (10) comprises the following:
- a coupling housing (11) having at least one frontal housing opening;
- a first contact terminal support comprising at least one contact terminal (18) arranged in the coupling housing (11); and
- a device in accordance with one of claims 1 to 6.

8. The electrical contact coupling according to claim 7,
wherein the interface element (12) is configured as a preferably plate-shaped contacting support having at least one optical fiber (14) extending in the longitudinal direction of the contacting support.

9. The electrical contact coupling according to claim 8,
wherein the first and/or second terminal (15, 16) is/are arranged on a lower side of the contacting support.

10. The electrical contact coupling according to one of claims 7 to 9,
wherein the first contact terminal support or the first contact terminal (18) respectively is designed as a receiving part in which at least part of the interface element (12) is accommodated.

11. The electrical contact coupling according to one of claims 7 to 10,
wherein the interface element (12) is displaceable relative to the first contact terminal support, or relative to the first contact terminal (18) respectively, from its first position into its second position and vice versa.

12. The electrical contact coupling according to claim 11,
wherein a guide (19) is further provided to control the movement of the interface element (12) relative to the contact terminal support or relative to the contact terminal (18) respectively.

13. An arrangement consisting of a first electrical contact coupling (10) and a preferably identically constructed second electrical contact coupling (10') which serves as a mating coupling to the first electrical contact coupling (10), wherein the first electrical contact coupling (10) is an electrical contact coupling in accordance with one of claims 7 to 12.

## Revendications

1. Dispositif pour la transmission de données et/ou de signaux entre une première caisse de wagon et une deuxième caisse de wagon, reliée mécaniquement à la première caisse de wagon, d'un véhicule à plusieurs unités, en particulier d'un véhicule guidé sur rails, le dispositif présentant un élément d'interface (12) ayant au moins un ensemble de guides d'ondes lumineuses, l'ensemble de guides d'ondes lumineuses présentant au moins un guide d'ondes lumineuses (14) en tant que moyen de transmission pour un système de communication par ligne du véhicule à plusieurs unités et un premier terminal (15) associé à la première caisse de wagon et un deuxième terminal (16) associé à la deuxième caisse de wagon, l'élément d'interface (12) pouvant être déplacé par rapport à une tête de couplage de la première caisse de wagon dans la direction longitudinale du couplage depuis une première position, dans laquelle l'élément d'interface (12) ayant ledit au moins un ensemble de guides d'ondes lumineuses est logé complètement dans la tête de couplage de la première caisse de wagon, jusque dans une deuxième position, et inversement,
dans lequel
dans la deuxième position, au moins le deuxième terminal (16) de l'ensemble de guides d'ondes lumineuses fait saillie de la tête de couplage de la première caisse de wagon pour former une connexion de données entre ledit au moins un guide d'ondes lumineuses (14) de l'ensemble de guides d'ondes lumineuses et un terminal de contact (20) d'une tête de couplage de la deuxième caisse de wagon,
ledit au moins un guide d'ondes lumineuses (14) de l'ensemble de guides d'ondes lumineuses comprend un cœur de guide d'ondes lumineuses, en particulier un cœur en verre mince, qui relie les premier et deuxième terminaux (15, 16) en termes de technique de signalisation.

2. Dispositif selon la revendication 1,
dans lequel
dans la deuxième position de l'élément d'interface (12), le premier terminal (15), associé à la première caisse de wagon, de l'ensemble de guides d'ondes lumineuses est disposé par rapport à un terminal de contact (18) de la tête de couplage de la première caisse de wagon de telle sorte qu'une connexion de données puisse être établie entre le premier terminal (15) et le terminal de contact (18) de la tête de couplage de la première caisse de wagon; et/ou
dans la deuxième position de l'élément d'interface (12), le deuxième terminal (16), associé à la deuxième caisse de wagon, de l'ensemble de guides d'ondes lumineuses est disposé par rapport au terminal de contact (20) de la tête de couplage de la deuxième caisse de wagon de telle sorte qu'une connexion de données puisse être établie entre le deuxième terminal (16) et le terminal de contact (20) de la tête de couplage de la deuxième caisse de wagon.

3. Dispositif selon la revendication 1 ou 2,
dans lequel
le terminal de contact (18) de la tête de couplage de la première caisse de wagon est réalisé sous forme de terminal d'émission et/ou de réception, et le premier terminal (15) de l'ensemble de guides d'ondes lumineuses est réalisé sous forme de terminal de réception et/ou d'émission qui lui est complémentaire de manière correspondante pour former une connexion de données dans la deuxième position de l'élément d'interface (12) ; et/ou le terminal de contact (20) de la tête de couplage de la deuxième caisse de wagon est réalisé sous forme de terminal de réception et/ou d'émission, et le deuxième terminal (16) de l'ensemble de guides d'ondes lumineuses est réalisé sous forme de terminal d'émission et/ou de réception qui lui est complémentaire de manière correspondante pour former une connexion de données dans la deuxième position de l'élément d'interface (12).

4. Dispositif selon la revendication 2 ou 3,
dans lequel
le terminal de contact (18) de la tête de couplage de la première caisse de wagon est connecté, en termes de technique de signalisation, à au moins un guide d'ondes lumineuses pour l'acheminement des données et/ou des signaux à transmettre par l'intermédiaire de l'élément d'interface (12) au terminal de contact (18) ; et/ou
le terminal de contact (20) de la tête de couplage de la deuxième caisse de wagon est connecté, en termes de technique de signalisation, à au moins un guide d'ondes lumineuses pour le transfert des données et/ou des signaux transmis par l'élément d'interface (12) et reçus par le terminal de contact (20).

5. Dispositif selon la revendication 2 ou 3,
dans lequel
le terminal de contact (18) de la tête de couplage de la première caisse de wagon est connecté, en termes de technique de signalisation, à au moins une ligne de cuivre pour l'acheminement des données et/ou des signaux à transmettre par l'élément d'interface (12) au terminal de contact (18) ; et/ou
le terminal de contact (20) de la tête de couplage de la deuxième caisse de wagon est connecté, en termes de technique de signalisation, à au moins une ligne de cuivre pour le transfert des données et/ou des signaux transmis par l'élément d'interface (12) et reçus par le terminal de contact (20).

6. Dispositif selon l'une des revendications 2 à 5,
dans lequel
dans la deuxième position de l'élément d'interface (12), le terminal de contact (18) de la tête de couplage de la première caisse de wagon et le premier terminal (15) de l'ensemble de guides d'ondes lumineuses se trouvent verticalement l'un au-dessus de l'autre ; et/ou
dans la deuxième position de l'élément d'interface (12), le terminal de contact (20) de la tête de couplage de la deuxième caisse de wagon et le deuxième terminal (16) de l'ensemble de guides d'ondes lumineuses se trouvent verticalement l'un au-dessus de l'autre.

7. Couplage à contact électrique (10) pour un véhicule guidé sur rails, en particulier un véhicule ferroviaire, le couplage à contact électrique (10) comprenant :
- un boîtier de couplage (11) présentant au moins une ouverture de boîtier du côté frontal ;
- un premier support de terminal de contact disposé dans le boîtier de couplage (11) et comportant au moins un terminal de contact (18) ; et
- un dispositif selon l'une des revendications 1 à 6.

8. Couplage à contact électrique selon la revendication 7,
dans lequel
l'élément d'interface (12) est réalisé sous la forme d'un support de mise en contact, de préférence en forme de plaque, présentant au moins un guide d'ondes lumineuses (14) s'étendant dans la direction longitudinale du support de mise en contact.

9. Couplage à contact électrique selon la revendication 8,
dans lequel
le premier et/ou le deuxième terminal (15, 16) est/sont disposé(s) sur une face inférieure du support de mise en contact.

10. Couplage à contact électrique selon l'une des revendications 7 à 9,
dans lequel
le premier support de terminal de contact ou le premier terminal de contact (18) est réalisé sous forme de partie de réception dans laquelle l'élément d'interface (12) est reçu au moins localement.

11. Couplage à contact électrique selon l'une des revendications 7 à 10,
dans lequel
l'élément d'interface (12) est déplaçable par rapport au premier support de terminal de contact ou par rapport au premier terminal de contact (18) depuis sa première à sa deuxième position et inversement.

12. Couplage à contact électrique selon la revendication 11,
dans lequel
il est en outre prévu un guidage (19) pour guider le mouvement de l'élément d'interface (12) par rapport au support de terminal de contact ou par rapport au terminal de contact (18).

13. Ensemble constitué d'un premier couplage à contact électrique (10) et d'un deuxième couplage à contact électrique (10'), de préférence de construction identique à celui-ci, qui sert de couplage antagoniste au premier couplage à contact électrique (10), le premier couplage à contact électrique (10) étant un couplage à contact électrique selon l'une des revendications 7 à 12.
